# EUROPEAN PATENT SPECIFICATION

(11) **EP 2 879 251 B1**
(45) Date of publication and mention of the grant of the patent: **20.02.2019**
(21) Application number: 13822712.9
(22) Date of filing: 24.07.2013
(51) Int. Cl.: B60R 16/02

(54) **WIRE-HARNESS PACKAGING MEMBER, AND WIRE HARNESS**
KABELBAUMVERPACKUNGSELEMENT UND KABELBAUM
ÉLÉMENT DE MISE EN BOÎTIER DE FAISCEAU DE CÂBLES, ET FAISCEAU DE CÂBLES

(30) Priority: 25.07.2012 JP 2012164310; 19.02.2013 JP 2013029579
(43) Date of publication of application: 03.06.2015
(60) Divisional application: 15000474.5
(73) Proprietor: Yazaki Corporation, Minato-ku Tokyo 108-8333 (JP)
(72) Inventor: ADACHI Hideomi, Makinohara-shi Shizuoka 421-0492 (JP); INAO Shinichi, Makinohara-shi Shizuoka 421-0492 (JP)
(74) Representative: Grünecker Patent- und Rechtsanwälte PartG mbB
(86) International application number: PCT/JP2013/070074
(87) International publication number: WO 2014/017548

(56) References cited:
- EP-A1- 1 681 206
- DE-A1- 3 725 459
- DE-A1-102005 003 654
- DE-A1-102005 054 926
- DE-A1-102010 042 963
- DE-U1-202005 013 140
- JP-A- 2000 152 469
- JP-A- 2004 187 426
- JP-A- 2007 185 067
- JP-A- 2009 143 326
- US-A1- 2010 045 106

## Description

### Technical Field

The present invention relates to a wire-harness packaging member and a wire harness including the packaging member.

### Background Art

A battery for a hybrid car or an electric car and an inverter unit are electrically connected through a high voltage (i.e. for high voltage application) wire harness. The wire harness includes a high voltage electric wire serving as a high voltage conductive path, and a packaging member for packaging the high voltage electric wire. The document US 2010/0045106 A1 discloses a prior art wiring harness which corresponds to the preamble of claim 1.

In the following Patent Literature 1, a metal pipe is used as a packaging member. The packaging member is fixed to a predetermined position of a vehicle body by a clamp fitted to the outer peripheral surface of the packaging member.

### Citation List

### Patent Literature

Patent Literature 1: JP-A-2010-215010

### Summary of the Invention

### Problem that the Invention is to Solve

In the aforementioned background-art technique, however, manual labor to decide the attachment position of the clamp by use of a jig is required in order to attach the clamp (post-fitted part). Alternatively, manual labor to measure a distance of the metal pipe from a reference position and decide the attachment position of the clamp based on the measured distance is required.

The present invention has been developed in consideration of the aforementioned situation, and an object of the invention is to provide a wire-harness packaging member and a wire harness capable of improving workability and reducing jigs, etc.

### Means for Solving the Problem

In order to solve the foregoing problem, a wire-harness packaging member according to the invention is characterized by the features of the independent claim.
(1) A wire-harness packaging member covering a conductive path includes:
   a setting portion which is provided on an outer surface of the wire-harness packaging member so as to set an attachment position of a post-fitted part attached to the wire-harness packaging member.
(2) In the wire-harness packaging member according to the aforementioned paragraph (1):
   the wire-harness packaging member is a tube body which is made of resin and which is provided with a mark portion as the setting portion when the tube body is molded out of the resin.
(3) In the wire-harness packaging member according to the aforementioned paragraph (1):
   the wire-harness packaging member is a tube body which is made of resin and with which an attachment portion is formed integrally as the setting portion when the tube body is molded out of the resin.
(4) In the wire-harness packaging member according to the aforementioned paragraph (3):
   the attachment portion includes a portion which extends in at least one of a circumferential direction and a tube axis direction of the outer surface.
(5) In the wire-harness packaging member according to the aforementioned paragraph (4):
   the attachment portion includes a convex-shaped portion or a strip-shaped portion protruding from the outer surface.
(6) In the wire-harness packaging member according to any one of the aforementioned paragraphs (1) through (5):
   the wire-harness packaging member is formed into a substantially linear shape as a whole, including a bendable tube portion formed as a portion which can be bent and a non-bendable tube portion formed as a portion which is hardly bent, and the attachment portion is formed in the non-bendable tube portion.

In addition, in order to solve the foregoing problem, a wire harness according to the invention is characterized by the following points.
(7) A wire harness includes the wire-harness packaging member according to any one of the aforementioned paragraphs (1) through (6), and a conductive path which is covered with the wire-harness packaging member.
(8) In the wire harness according to the aforementioned paragraph (7):
   at least a part of the wire-harness packaging member is disposed under a floor of a vehicle.

According to the wire-harness packaging member according to the aforementioned paragraph (1), in which a setting portion for setting the attachment position is provided on the outer surface, the attachment position to the post-fitted part can be identified easily by the setting portion for setting the attachment position. Accordingly, work which has been carried out by manual labor in the background art in order to set the attachment position becomes unnecessary. In addition, since the work for setting the attachment position by manual labor becomes unnecessary, special jigs become unnecessary. Thus, according to the wire-harness packaging member according to the aforementioned paragraph (1), it is possible to improve workability and reduce jigs, as compared with a background-art one.

According to the wire-harness packaging member according to the aforementioned paragraph (2), in which the packaging member is a tube body which is made of a resin and provided with a mark portion, work which has been carried out by manual labor in the background art in order to set the attachment position becomes unnecessary. In addition, since the work for setting the attachment position by manual labor becomes unnecessary, special jigs become unnecessary.

According to the wire-harness packaging member according to the aforementioned paragraph (3), in which the packaging member is a tube body which is made of resin and with which an attachment portion is formed integrally, the attachment position can be identified without increasing the number of parts. Accordingly, work which has been carried out by manual labor in the background art in order to set the attachment position becomes unnecessary. In addition, since the work for setting the attachment position by manual labor becomes unnecessary, special jigs become unnecessary.

According to the wire-harness packaging member according to the aforementioned paragraph (4), in which the attachment portion is formed including a portion extending in at least one of a circumferential direction and a tube axis direction of the outer surface, it is possible to prevent misalignment of the post-fitted part without increasing working man hours or the number of parts.

In the wire-harness packaging member according to the aforementioned paragraph (5), the attachment portion is formed including a convex-shaped portion or a strip-shaped portion protruding from the outer surface. Accordingly, for example, when the wire harness is wired under the floor of a car or the like, the convex-shaped portion or the strip-shaped portion serves as a portion which can secure chipping resistant performance. In addition, according to the wire-harness packaging member according to the aforementioned paragraph (5), necessary and sufficient rigidity can be secured on the attachment portion side in spite of the reduced thickness of the tube body when the attachment portion is formed into a strip-like shape extending in the axis direction of the tube body. Further, according to the wire-harness packaging member according to the aforementioned paragraph (5), the attachment portion serves as a portion which can engage with the post-fitted part in the rotation direction thereof, that is, serves as a rotation stopper when the attachment portion is formed to protrude circumferentially in the outer surface of the tube body, for example, at predetermined intervals.

According to the wire-harness packaging member according to the aforementioned paragraph (6), in which the wire-harness packaging member is formed into a substantially linear shape as a whole, the manufacturing process of the wire harness can be automated. Due to the automation, the number of workers can be reduced. In addition, according to the wire-harness packaging member according to the aforementioned paragraph (6), which has a structure including a bendable tube portion and a non-bendable tube portion, the bendable tube portion may be disposed in a portion which will have to be bent. Thus, the wire-harness packaging member which has a substantially linear shape as a whole can be quickly brought into a state where the wire-harness packaging member is partially bent when the wire-harness packaging member has to be bent, for example, during transportation or during wiring path arrangement. Further, according to the wire-harness packaging member according to the aforementioned paragraph (6), in which the attachment portion is formed in the portion which is hardly bent, the position of the attachment portion can be stabilized. Thus, the workability can be improved.

According to the wire harness according to the aforementioned paragraph (7), which includes the wire-harness packaging member according to any one of the aforementioned paragraphs (1) through (6), it is possible to provide a wire harness which is light in weight and excellent in workability during attachment of a post-fitted part, and which is further low in price and also excellent in chipping resistant performance and so on.

The wire harness according to the aforementioned paragraph (8) is applied to a long wire harness which is disposed under a floor of a vehicle. Accordingly, large special jigs can be made unnecessary.

### Brief Description of the Drawings

Fig. 1 is a schematic diagram showing a wiring state of a wire harness.
Fig. 2 is a perspective view showing the configuration of the wire harness.
Fig. 3 is a configuration view of a packaging member according to a first embodiment.
Fig. 4 is a view showing the wire harness which is being wired on a wiring path.
Fig. 5 is a view showing the wire harness which is being transported.
Fig. 6(a) and Fig. 6(b) are views showing modifications of attachment portions and clamps in Fig. 3.
Fig. 7(a) and Fig. 7(b) are views showing a packaging member according to a second embodiment.
Figs. 8(a) to Fig. 8(c) are views showing a packaging member according to a third embodiment, Fig. 8(c) being an enlarged view of a portion Vlllc in Fig. 8(a).
Fig. 9 is a view showing a modification of clamps when attachment portions in Figs. 8(a) to 8(c) are used.
Figs. 10(a) to 10(d) are views showing a packaging member according to a fourth embodiment, Fig. 10(c) being an enlarged view of a portion Xc in Fig. 10(a), Fig. 10(d) being enlarged view of a portion Xd in Fig. 10(b).
Fig. 11 is a perspective view showing an apparatus for manufacturing a packaging member.
Fig. 12 is a plan view showing a main portion of the manufacturing apparatus in Fig. 11.
Fig. 13 is a plan view showing a state where mold blocks in Fig. 12 and the packaging member are disposed.
[Figs. 14] Fig. 14(a) to Fig. 14(c) are sectional views showing the mold blocks in Fig. 13.
Fig. 15(a) to Fig. 15(c) are configuration views of a packaging member according to a fifth embodiment.
Fig. 16(a) and Fig. 16(b) are configuration views of a packaging member according to a sixth embodiment.

### Mode for Carrying Out the Invention

A wire harness according to each embodiment of the invention includes at least one conductive path and a packaging member which is a tube body made of resin and covering the conductive path. An attachment portion for a post-fitted part is formed integrally with an outer surface of the packaging member. The attachment portion is formed to extend in at least one of the circumferential direction and the tube axis direction of the outer surface of the packaging member. The attachment portion has a function of preventing misalignment, rotation or the like relative to the post-fitted part.

A mark portion may be provided in the packaging member in place of the aforementioned attachment portion. The mark portion is a setting portion for setting an attachment position to the post-fitted part.

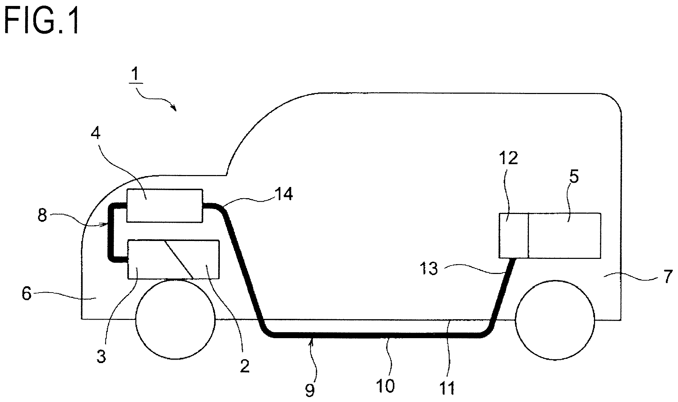

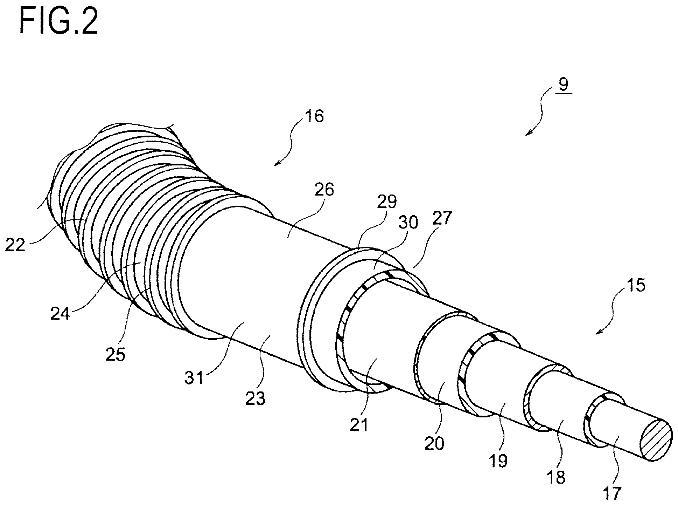

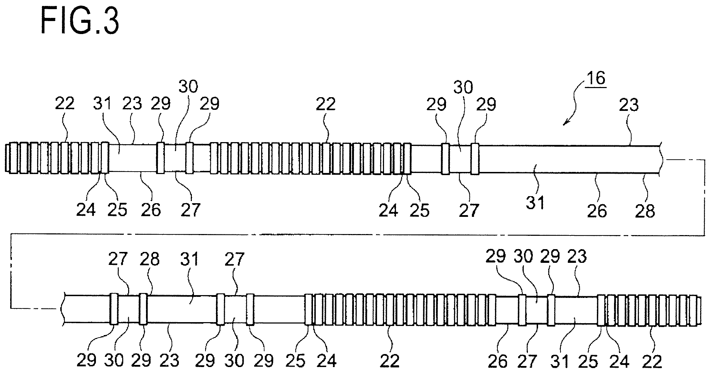

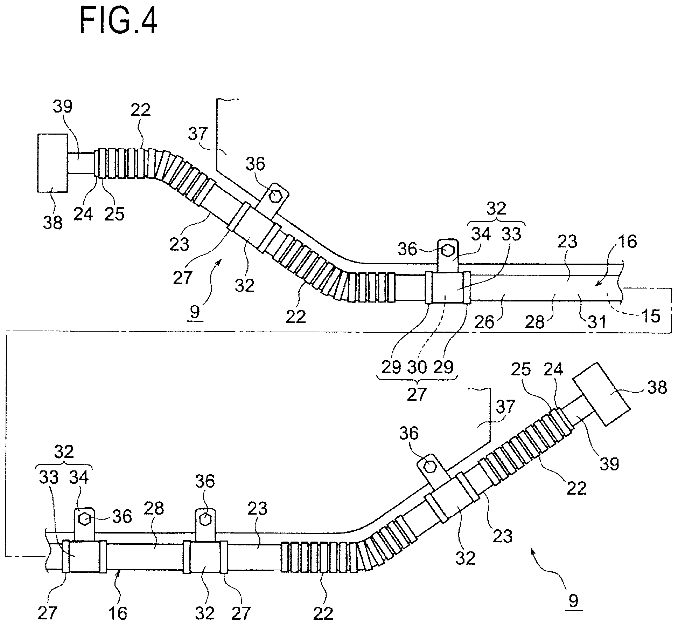

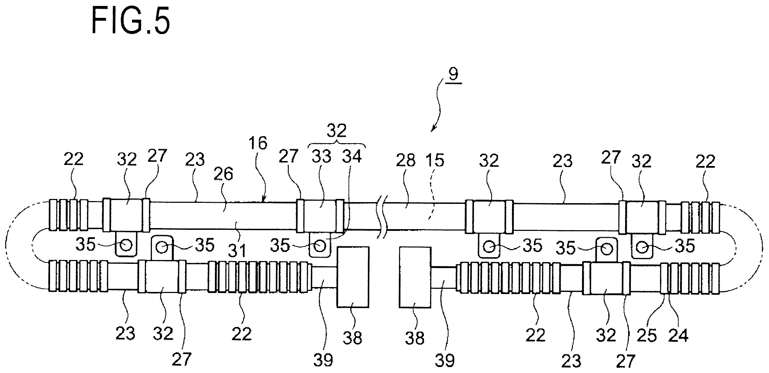

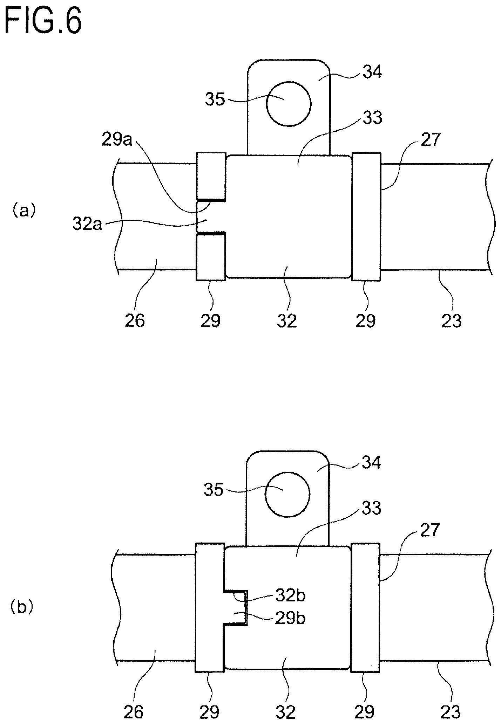

A wire-harness packaging member will be described below with reference to Fig. 1 to Fig. 6(b). Fig. 1 is a schematic diagram showing a wiring state of a wire harness. Fig. 2 is a perspective view showing the configuration of the wire harness. Fig. 3 is a configuration view of the packaging member according to the first embodiment. Fig. 4 is a view showing the wire harness which is being wired on a wiring path. Fig. 5 is a view showing the wire harness which is being transported. Fig. 6(a) and Fig. 6(b) are views showing modifications of attachment portions and clamps.

This wire harness including a wire-harness packaging member is wired in a hybrid car (which may be replaced by an electric car or a general car).

In Fig. 1, the reference numeral 1 represents a hybrid car. The hybrid car 1 is a vehicle which is driven by a mixture of two power sources, that is, an engine 2 and a motor unit 3. To the motor unit 3, electric power is supplied from a battery 5 (or a battery pack) through an inverter unit 4. In this example, the engine 2, the motor unit 3 and the inverter unit 4 are mounted in an engine room 6 which is close to front wheels etc. On the other hand, the battery 5 is mounted in a car rear portion 7 which is close to rear wheels etc. Incidentally, the battery 5 may be mounted in a car cabin which is located at the rear of the engine room 6.

The motor unit 3 and the inverter unit 4 are electrically connected through a high voltage wire harness 8. In addition, the battery 5 and the inverter unit 4 are also electrically connected through a high voltage wire harness 9. An intermediate portion 10 of the wire harness 9 is wired in an vehicle underfloor 11. In addition, the wire harness 9 is wired substantially in parallel with the vehicle underfloor 11. The vehicle underfloor 11 is a well-known body which is a so-called panel member. Through holes (not shown) are formed in predetermined positions of the vehicle underfloor 11. The wire harness 9 is inserted into the through holes.

The wire harness 9 and the battery 5 are electrically connected through a junction block 12 which is provided in the battery 5. A rear end 13 of the wire harness 9 is electrically connected to the junction block 12 by a well-known method. On the other hand, a front end 14 of the wire harness 9 is electrically connected to the inverter unit 4 by a well-known method.

The motor unit 3 has a motor (not shown) and a generator (not shown). On the other hand, the inverter unit 4 has an inverter (not shown) and a converter (not shown). The motor unit 3 is formed as a motor assembly including a shield case (not shown). The inverter unit 4 is also formed as an inverter assembly including a shield case (not shown). The battery 5 is a modularized one based on Ni-MH or Li-ion. For example, an electric storage device such as a capacitor may be used. The battery 5 is not limited especially as long as it can be used in the hybrid car 1 or an electric car.

First, the configuration and structure of the wire harness 9 will be described. The wire harness 9 is a high voltage member for electrically connecting the inverter unit 4 and the battery 5 with each other as described above. The wire harness 9 is configured including a high voltage coaxial composite conductive path 15 (that is, a conductive path) and a packaging member 16 (that is, a wire-harness packaging member). The wire harness 9 configured thus is attached to the vehicle underfloor 11 or the like through clamps 32 (which will be described later) as post-fitted parts. Incidentally, the "high voltage" means one for high voltage.

In Fig. 2, the high voltage coaxial composite conductive path 15 bears both a plus circuit and a minus circuit by itself. That is, the high voltage coaxial composite conductive path 15 has circuits of two systems. Specifically, the high voltage coaxial composite conductive path 15 has a first conductive path 17 and a first insulator 18. The first conductive path 17 is circular in section and is located at the center of the high voltage coaxial composite conductive path 15. The first insulator 18 covers the outer circumference of the first conductive path 17 with a predetermined thickness. In addition, the high voltage coaxial composite conductive path 15 has a second conductive path 19 and a second insulator 20. The second conductive path 19 is provided on the outer side of the first insulator 18. The second insulator 20 covers the outer circumference of the second conductive path 19 with a predetermined thickness. Further, the high voltage coaxial composite conductive path 15 has an electromagnetic shield member 21. The electromagnetic shield member 21 is cylindrical and in close contact with the outer surface of the second insulator 20. Incidentally, the high voltage coaxial composite conductive path 15 may further include a sheath which covers the outer circumference of the electromagnetic shield member 21 with a predetermined thickness.

The electromagnetic shield member 21 is made of a well-known braid, metal foil, or the like. Although the electromagnetic shield member 21 is arranged to belong to the configuration of the high voltage coaxial composite conductive path 15 as described above, the electromagnetic shield member 21 may be arranged as follows. That is, the electromagnetic shield member 21 may be arranged to be slightly loosely fitted to the second insulator 20. The electromagnetic shield member 21 may be formed into a cylindrical shape so that the electromagnetic shield member 21 can be brought into close contact with the outer surface of the second insulator 20. Alternatively, the electromagnetic shield member 21 may be formed into a tape-like or sheet-like shape so that the electromagnetic shield member 21 can be wound on the outer surface of the second insulator 10 and in close contact therewith.

Examples of the conductive path may include a well-known high voltage electric wire including a conductor and an insulator, a shield electric wire, a cab-tire cable, etc. in addition to the aforementioned high voltage coaxial composite conductive path 15. Although the high voltage coaxial composite conductive path 15 has two systems in the embodiment, the high voltage coaxial composite conductive path 15 is not limited thereto. The high voltage coaxial composite conductive path 15 may have three systems ..., or n systems. That is, the high voltage coaxial composite conductive path 15 can have n systems if circuits are added outward to keep the configuration as a single coaxial path.

In Fig. 2 and Fig. 3, the packaging member 16 is a tube body for accommodating and protecting the high voltage coaxial composite conductive path 15. The packaging member 16 has bendable tube portions 22 and non-bendable tube portions 23. The packaging member 16 is molded out of resin so that the packaging member 16 can be formed into an approximately linear shape as a whole.

The bendable tube portions 22 serve as portions which can be bent during transportation of the wire harness 9 or during wiring path arrangement of the same. The non-bendable tube portions 23 are continued to the bendable tube portions 22. The non-bendable tube portions 23 are provided as portions which cannot be bent (or which can be hardly bent). The bendable tube portions 22 and the non-bendable tube portions 23 are disposed and formed so that their positions and lengths can be adapted to an attachment shape to a vehicle.

Although a plurality of bendable tube portions 22 and a plurality of non-bendable tube portions 23 are formed in the embodiment, the number of bendable tube portions 22 and the number of non-bendable tube portions 23 are not limited especially. It will go well if at least one bendable tube portion 22 and at least one non-bendable tube portion 23 are formed.

Each bendable tube portion 22 is formed into a bellows tube shape having a plurality of concave portions 24 and a plurality of convex portions 25 which are formed in the circumferential direction of the outer surface and around the entire circumference thereof. The concave portions 24 and the convex portions 25 are continuous to one another alternately in the longitudinal direction of the outer surface. The length of each bendable tube portion 22 is set in accordance with the bending range. The bendable tube portion 22 is formed with elasticity (or flexibility) and as a portion which can be bent. In the first embodiment, the bendable tube portion 22 is formed as a portion similar to a well-known corrugated tube. Incidentally, the shape of the bendable tube portion 22 is not limited to the aforementioned bellows tube shape as long as it is a bendable shape.

Since the packaging member 16 has a portion whose shape is similar to that of a corrugated tube as described above, the packaging member 16 can be regarded as a "corrugated tube", a "partially shaped corrugated tube" or the like.

The packaging member 16 is formed into a shape provided with no slit (or unslitted) in its tube axis direction (or its longitudinal direction). The reason why no slit is provided is to prevent moisture from leaking into the packaging member 16 to thereby improve waterproof performance. Another reason is to secure the strength of the packaging member 16.

Each of the non-bendable tube portions 23 has a non-bendable tube portion body 26 and an attachment portion 27 (or a setting portion for setting the attachment position). The non-bendable tube portion body 26 is formed as a portion which cannot be bent during transportation or during wiring path arrangement as described above. The portion which cannot be bent means a portion which is not aggressively provided with flexibility. The non-bendable tube portion body 26 is formed into a straight tube shape which is circular in section. The sectional shape of the non-bendable tube portion body 26 is not limited to a circular shape but may be an elliptical shape, an oval shape, a rectangular shape, or the like. The non-bendable tube portion 23 can be also regarded as a "straight tube portion" or a "straight portion" due to the straight tube shape of the non-bendable tube portion body 26.

The non-bendable tube portion body 26 is formed to be thin with minimum required strength. Incidentally, rigidity may be reduced when the non-bendable tube portion body 26 is formed to be thin. However, the reduced amount of rigidity can be compensated by the rigidity of the attachment portions 27.

The packaging member 16 has an underfloor non-bendable tube portion 28 wired on the vehicle underfloor 11 (see Fig. 1 and Fig. 4). Since the underfloor non-bendable tube portion 28 is wired on the vehicle underfloor 11 (for example, wired to extend along a lean hose), the underfloor non-bendable tube portion 28 is formed to be long. The underfloor non-bendable tube portion 28 is one of the non-bendable tube portions 23. A plurality of attachment portions 27 are also provided in the underfloor non-bendable tube portion 28.

The attachment portions 27 are provided integrally with the non-bendable tube portion bodies 26 as portions to which the post-fitted parts (that is, the clamps 32) can be attached. More in detail, the attachment portions 27 are molded integrally with the non-bendable tube portion bodies 26. Since the packaging member 16 is made of resin, the attachment portions 27 can be easily integrated with the non-bendable tube portion bodies 26. Incidentally, the attachment portions 27 are provided in portions to which the clamps 32 should be attached. Accordingly, there is no problem even when some non-bendable tube portions 23 are not provided with the attachment portions 27.

Each attachment portion 27 includes a pair of movement restriction portions 29 and an attachment/detachment portion 30. The paired movement restriction portions 29 are disposed in positions corresponding to opposite sides of the clamp 32 which will be described later. The paired movement restriction portions 29 restrict movement of the clamp 32 in the tube axis direction of the non-bendable tube portion 26. In addition, the paired movement restriction portions 29 also serve for recognizing the attachment position of the clamp 32. In the embodiment, each of the paired movement restriction portions 29 is formed into a ring-like flange shape. Specifically, the movement restriction portion 29 is formed into a shape which protrudes from an outer surface 31 of the non-bendable tube portion body 26 and has a convex shape extending circumferentially around the entire circumference of the outer surface 31. Incidentally, the shape is simply an example. Other shapes will be described

In each of the paired movement restriction portions 29 in the first embodiment, the protruding height or the width in the tube axis direction of the packaging member 16 agrees with the protruding height or the width of the convex portion 25 in the bendable tube portion 22. This dimensional design is simply an example.

The attachment/detachment portion 30 is formed as a portion to which the clamp 32 can be attached as will be described later. The outer surface 31 of the non-bendable tube portion body 26 located between the paired movement restriction portions 29 corresponds to the attachment/detachment portion 30, which is formed as a curved surface. Incidentally, it may be considered that a portion biting into the attachment/detachment portion 30 is provided on the clamp 32 side so that the clamp 32 can be surely prevented from rotating after the clamp 32 is attached. In addition, it is also effective to provide a rotation stopper structure shown in Fig. 6 which will be described later.

In Fig. 4, well-known clamps may be used as the clamps 32 which are attached to the attachment portions 27.

Each clamp 32 has a tube body attachment portion 33 which is formed in accordance with the external shape of the non-bendable tube portion 23 (that is, the external shape of the attachment/detachment portion 30), and a fixation portion 34 which has a cantilever-like shape continued to the tube body attachment portion 33. Bolt insertion holes 35 (see Fig. 5) are formed in the fixation portions 34 to penetrate the fixation portions 34 respectively. The wire harness 9 is fixed to a fixing target 37 such as the vehicle underfloor 11 through bolts 36 inserted into the bolt insertion holes 35. The shape of the fixing target 37 is simply an example. When the wire harness 9 is fixed to the fixing target 37, wiring path arrangement is completed as shown in Fig. 4.

Examples of other post-fitted parts than the clamps 32 may include clips, grommets, protectors, etc. That is, the clamps 32 may be replaced by those parts as the post-fitted parts.

Well-known shield connectors 38 are provided in opposite terminals of the wire harness 9 respectively. One of the shield connectors 38 is an inverter-side shield connector, and the other shield connector 38 is a battery-side shield connector. The shield connectors 38 are connected to terminals 39 of the high voltage coaxial composite conductive path 15 extracted from the bent tube portions 22, respectively.

Next, manufacturing, transportation and wiring path arrangement of the wire harness 9 will be described. First in order to manufacture the wire harness 9, the high voltage coaxial composite conductive path 15 is inserted into the packaging member 16 which has been molded into a substantially straight line as a whole. After that, the shield connectors 38 are connected to the opposite terminals 39 of the high voltage coaxial composite conductive path 15. Then the clamps 32 are attached to the packaging member 16 correspondingly to the positions of the attachment portions 27.

When the wire harness 9 which has been manufactured is bent to fold in portions of predetermined bendable tube portions 22 as shown in Fig. 5, the wire harness 9 is disposed in a state in which the non-bendable tube portions 23 (that is, the non-bendable tube portions 23 and the underfloor non-bendable tube portion 28 in Fig. 5) are substantially parallel with each other. More specifically, the wire harness 9 is disposed so that the non-bendable tube portions 23 other than the long underfloor non-bendable tube portion 28 can extend along the long underfloor non-bendable tube portion 28 and substantially in parallel with one another. When the wire harness 9 is arranged in such a state, the whole length of the wire harness 9 can be shortened and the wire harness 9 can be packed with a minimum width. That is, the whole of the wire harness 9 is packed in a compact state. The wire harness 9 is transported in the compact state as it is.

When the wire harness 9 is fixed to the fixing target 37 through the clamps 32 as shown in Fig. 4, wiring path arrangement is completed.

The wire harness 9 described above with reference to Fig. 1 to Fig. 5, the wire harness 9 is configured including the high voltage coaxial composite conductive path 15 and the packaging member 15 made of resin, and the attachment portions 27 are molded integrally with the non-bendable tube portion bodies 26 in the non-bendable tube portions 23 of the packaging member 16, so that work carried out by manual labor in the background art in order to set attachment positions to post-fitted parts can be eliminated from the manufacturing process. That is, when the clamps 32 are attached to the packaging member 16, the attachment portions 27 serve as setting portions for setting the attachment positions of the clamps 32 so that the setting work for setting the attachment positions can be made unnecessary. Since the setting work for setting the attachment positions by manual labor can be made unnecessary, special jigs can be made unnecessary. According to the wire harness 9 it is therefore possible to improve workability and reduce jigs as compared with a background-art one.

In addition, according to the wire harness 9, misalignment of the clamps 32 in the tube axis direction can be prevented only by the attachment portions 27. It is therefore possible to prevent misalignment of the clamps 32 without increasing working man hours or adding parts.

Here, with reference to Fig. 6(a) and Fig. 6(b), description will be made about modifications of the attachment portions 27 and the clamps 32. The modifications are effective to surely prevent the clamps 32 from rotating.

In Fig. 6(a), an engagement concave portion 29a is formed in one (or each) of the paired movement restriction portions 29. The engagement concave portion 29a is formed so that the position and shape of the engagement concave portion 29a can cancel a part of the movement restriction portion 29 having a convex shape. That is, the movement restriction portion 29 is partially notched to form the engagement concave portion 29a. On the other hand, an engagement convex portion 32a which can engage with the engagement concave portion 29a is formed in each clamp 32. The engagement convex portion 32a is formed into a convex shape.

When the clamp 32 is attached, the engagement convex portion 32a is inserted into the engagement concave portion 29a so that the two members can engage with each other. The engagement concave portion 29a and the engagement convex portion 32a provide a rotation stopper structure. The rotation stopper structure can prevent the clamp 32 from rotating.

When engagement concave portions 29a are formed in both the paired movement restriction portions 29 respectively, the attachment direction of the clamp 32 can be changed at 180°. As a result, the degree of freedom in attachment can be enhanced.

Fig. 6(b) shows another modification. An engagement convex portion 29b is formed in one of the paired movement restriction portions 29. A convex-shaped portion is added to the movement restriction portion 29 so as to form the engagement convex portion 29b. On the other hand, an engagement concave portion 32b which can engage with the engagement convex portion 29b is formed in each clamp 32.

When the clamp 32 is attached, the engagement concave portion 32b is inserted onto the engagement convex portion 29b so that the two members can engage with each other. Such a rotation stopper structure can also prevent the clamp 32 from rotating.

### <Embodiment>

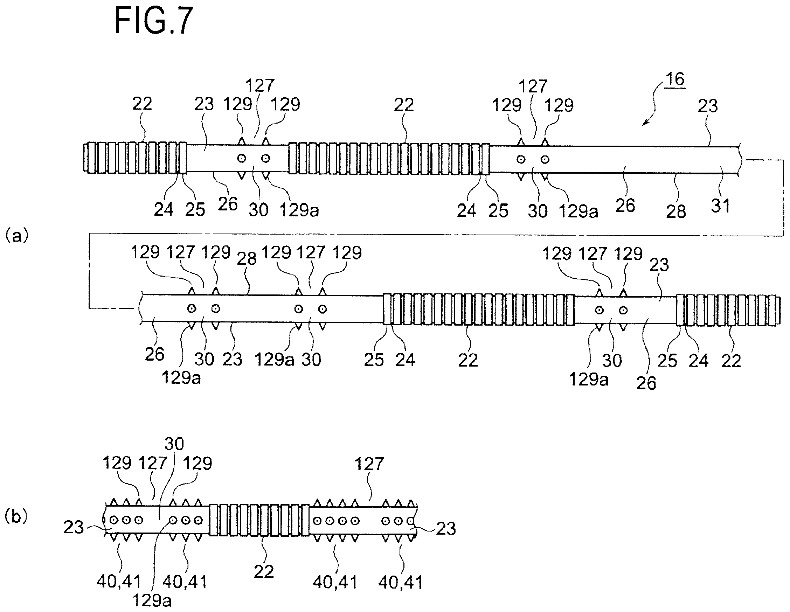

An embodiment of a wire-harness packaging member according to the invention will be described below with reference to Fig. 7(a) and Fig. 7(b). Fig. 7(a) and Fig. 7(b) are views showing the packaging member according to the second embodiment. Constituent members essentially the same as those in the aforementioned wire harness packaging member are referenced correspondingly, and detailed description thereof will be omitted. In addition, the packaging member according to the embodiment is included in a wire harness which is wired in the same manner as the wire harness 9 shown in Fig. 1.

In Fig. 7(a), the packaging member 16 according to the embodiment has attachment portions 127 (that is, setting portions for setting attachment positions) in place of the attachment portions 27 in the first wire-harness packaging member The attachment portions 127 are molded integrally with the non-bendable tube portion bodies 26 as portions to which the clamps 32 (see Fig. 4 and Fig. 5. The same thing can be applied below.) are attached as post-fitted parts.

Each attachment portion 127 includes a pair of movement restriction portions 129 and an attachment/detachment portion 30. The paired movement restriction portions 129 are formed as portions having the same function as the paired movement restriction portions 29 (see Fig. 3) in the first wire-harness packaging member. the wire-harness packaging member, a plurality of convex-shaped portions 129a protruding in substantially conical shapes correspond to each of the paired movement restriction portions 129. The shape of the movement restriction portion 129 is a substantially conical shape.

The paired movement restriction portions 129 each including a plurality of convex-shaped portions 129a are formed and disposed on the outer surface 31 of each non-bendable tube portion body 26 and at a predetermined interval in the circumferential direction of the outer surface 31. Incidentally, a plurality of convex-shaped portions 129a may be disposed and arranged in the tube axis direction of each non-bendable tube portion body 26 (that is, in the longitudinal direction of the packaging member 16) as shown in Fig. 7(b). The convex-shaped portions 129a arranged in the tube axis direction of the non-bendable tube portion body 26 are useful as chipping resistant portions 40 which are proof against chipping.

In spite of collision with a flipped stone or the like during running of the vehicle, the chipping resistant portions 40 can stand impact of the collision and prevent its influence on the non-bendable tube portion bodies 26 or the internal conductive paths. In addition, the chipping resistant portions 40 are effective due to their shape and arrangement when the vehicle runs over a curb stone or the like.

Due to the convex-shaped portions 129a arranged in the tube axis direction, the superficial area of the outer surface 31 of each non-bendable tube portion body 26 can be expanded. The quantity of heat radiated from the non-bendable tube portions 23 can be increased correspondingly to the superficial area of the convex-shaped portions 129a. To say other words, the cooling effect can be enhanced. That is, the convex-shaped portions 129a can be regarded as heat radiating portions 41.

When the packaging member 16 configured thus according to the embodiment is used, the same effect as that in the first wire-harness packaging member can be obtained.

A rotation stopper structure as shown in the first wire-harness packaging member may be used in the packaging member 16 according to the embodiment. That is, engagement convex portions or engagement concave portions may be formed on the clamp side so that they can be engaged with the convex-shaped portions 129a of the packaging member 16.

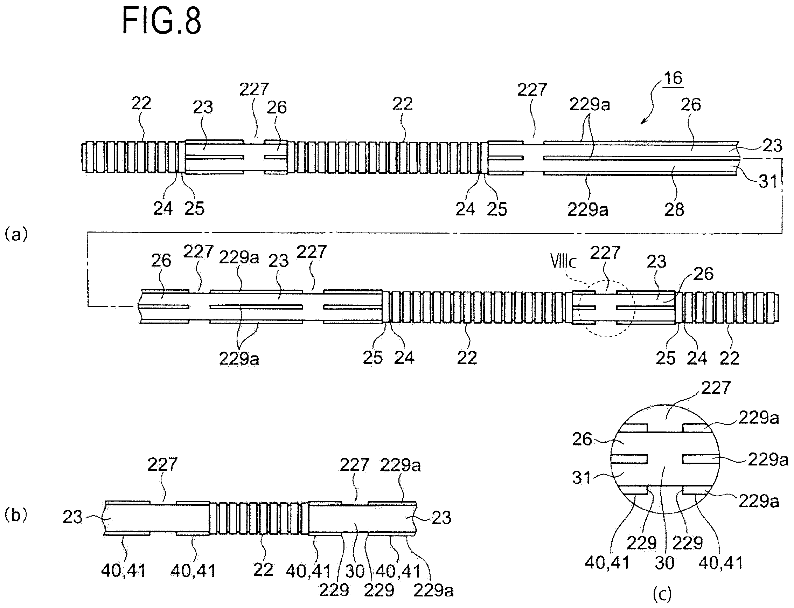

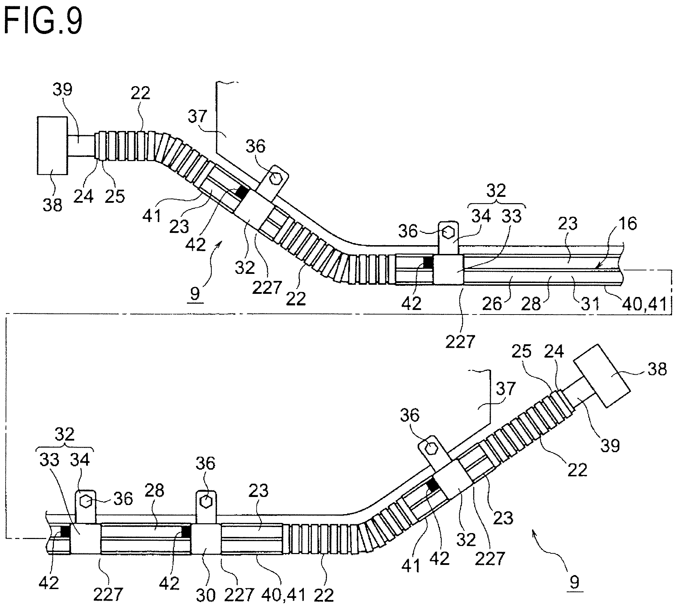

A further wire-harness packaging member will be described below with reference to Fig. 8(a) to Fig. 9. Fig. 8(a) to Fig. 8(c) are views showing the packaging member. Fig. 9 is a view showing a modification of clamps when attachment portions in Figs. 8(a) to 8(c) are used. Constituent members essentially the same as those in the first wire-harness packaging member and the described embodiment are referenced correspondingly, and detailed description thereof will be omitted. In addition, the packaging member according to the embodiment is included in a wire harness which is wired in the same manner as the wire harness 9 in the first wire-harness packaging member shown in Fig. 1.

In Fig. 8(a), the packaging member 16 has attachment portions 227 (that is, setting portions for setting attachment positions) in place of the attachment portions 27 in the first wire-harness packaging member. The attachment portions 227 are molded integrally with the non-bendable tube portion bodies 26 as portions to which the clamps 32 (see Fig. 4 and Fig. 5. The same thing can be applied below.) are attached as post-fitted parts.

Each attachment portion 227 includes a pair of movement restriction portions 229 and an attachment/detachment portion 30. The paired movement restriction portions 229 are formed as portions having the same function as the paired movement restriction portions 29 (see Fig. 3) in the first wire-harness packaging member. Respective end portions of a plurality of strip-shaped portions 229a correspond to each of the paired movement restriction portions 229. The strip-shaped portions 229a are formed to protrude from the outer surface 31 of each non-bendable tube portion body 26 and extend in the tube axis direction. In addition, the strip-shaped portions 229a are formed in a plurality of strips at predetermined intervals in the circumferential direction of the outer surface. Incidentally, only a pair of upper and lower strip-shaped portions 229a may be formed as shown in Fig. 8(b), or the strip-shaped portions 229a may be formed on one side (not shown, for example, only on the upper side).

The strip-shaped portions 229a are useful as the chipping resistant portions 40 or the heat radiating portions 41 in the same manner as in the embodiment. In addition, the strip-shaped portions 229a are also useful as portions for increasing rigidity. The non-bendable tube portion bodies 26 can be made thinner in accordance with the increased rigidity.

When an engagement convex portion 42 (black marked portion in Fig. 9) is formed in each clamp 32 and inserted between the strip-shaped portions 229a as shown in Fig. 9, the clamp 32 can be prevented from rotating.

When the packaging member 16 configured thus according to the third embodiment is used, the same effect as that in the first embodiment can be obtained.

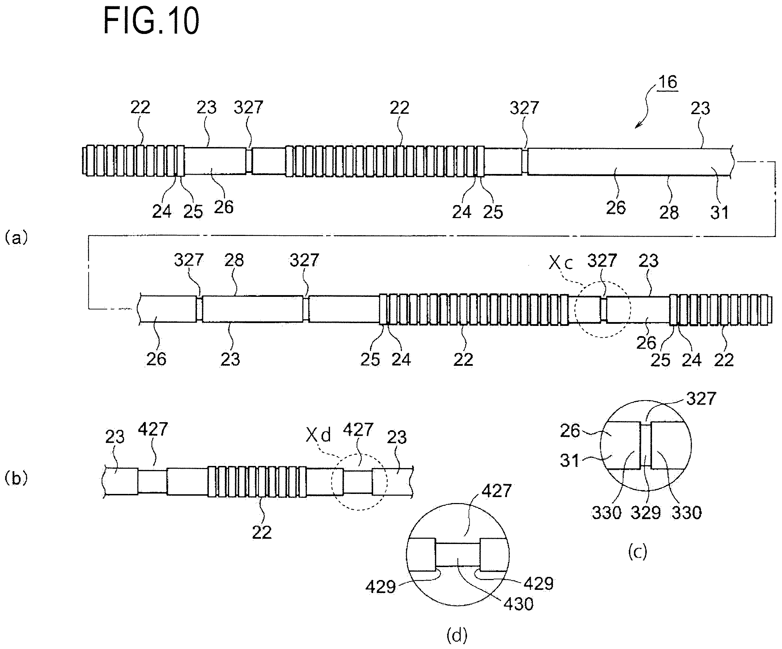

A further wire-harness packaging member will be described below with reference to Fig. 10(a) to Fig. 10(d). Fig. 10(a) to Fig. 10(d) are views showing the packaging member. Constituent members essentially the same as those in the previous wire-harness packaging members are referenced correspondingly, and detailed description thereof will be omitted. In addition, the packaging member according to the second wire-harness packaging member is included in a wire harness which is wired in the same manner as the wire harness 9 in the first embodiment shown in Fig. 1.

In Fig. 10(a), the packaging member 16 has attachment portions 327 (that is, setting portions for setting attachment positions) in place of the attachment portions 27 in the first wire-harness packaging member. The attachment portions 327 are molded integrally with the non-bendable tube portion bodies 26 as portions to which the clamps 32 (see Fig. 4 and Fig. 5. The same thing can be applied below.) are attached as post-fitted parts.

Each attachment portion 327 includes a movement restriction portion 329 and attachment/detachment portions 330. Differently from the previous wire-harness packaging members, the movement restriction portion 329 is formed into a concave shape (or a groove shape) in the circumferential direction of the outer surface 31 of each non-bendable tube portion body 26. The attachment/detachment portions 330 are formed to be disposed on the opposite sides of the movement restriction portion 329. For the attachment portion 327 configured thus, a not-shown convex portion is formed in the inner surface of the tube body attachment portion 33 (see Fig. 4 and Fig. 5) of each clamp 32.

The number of movement restriction portions 329 is not limited especially. In addition, each movement restriction portion 329 is not limited in the aforementioned circumferential direction but may be formed into a single groove or a plurality of grooves extending in the tube axis direction of each non-bendable tube portion body 26.

When the not-shown convex portion is not formed in the inner surface of the tube body attachment portion 33 of each clamp 32 but well-known clamps 32 are used as they are, attachment portions 427 are effective as shown in Fig. 10(b).

Each attachment portion 427 includes a pair of movement restriction portions 429 and an attachment/detachment portion 430. The paired movement restriction portions 429 are formed as step portions. The attachment/detachment portion 430 is formed as a portion to which a clamp 32 can be attached directly. The bottom surface of a concave portion between the aforementioned step portions corresponds to the attachment/detachment portion 430, which is formed into a curved surface.

When the packaging member 16 configured thus is used, the same effect as that in the first wire-harness packaging member can be obtained.

In this wire-harness packaging member a not-shown convex portion is formed in the inner surface of the tube body attachment portion 33 (see Fig. 4 and Fig. 5) of each clamp 32. However, the wire-harness packaging member is not limited to this. That is, a concave portion may be formed in place of the convex portion so that the concave portion can be, for example, engaged with the movement restriction portion 29 (see Fig. 3) in the first wire-harness packaging member.

### <Manufacturing Method>

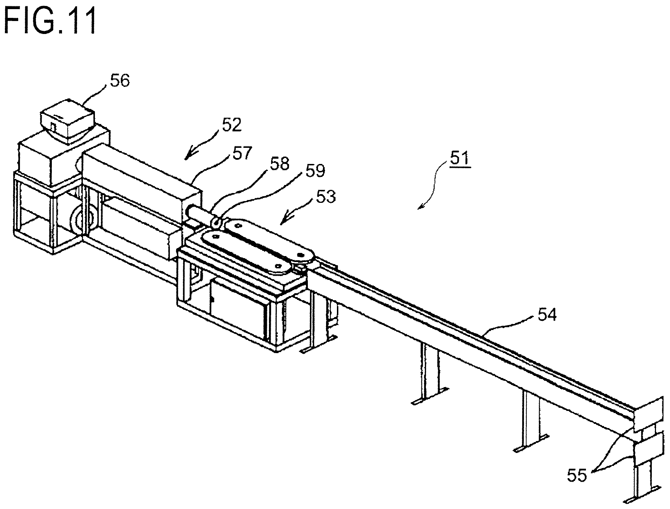

A method for manufacturing the wire-harness packaging member according to the embodiment will be described below with reference to Fig. 11 to Fig. 13.

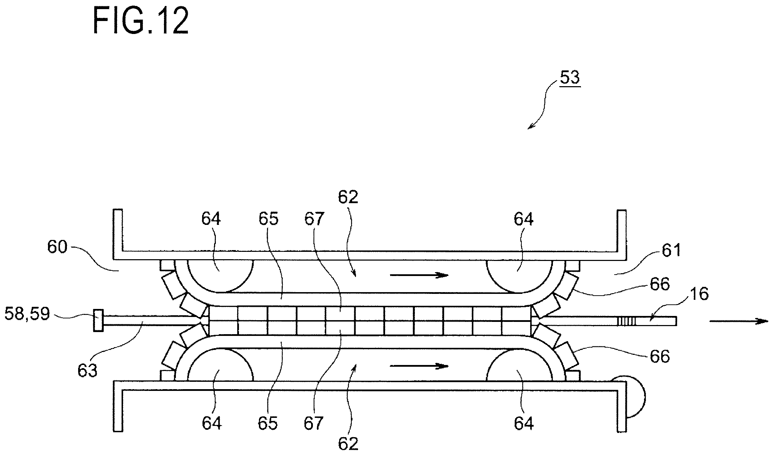

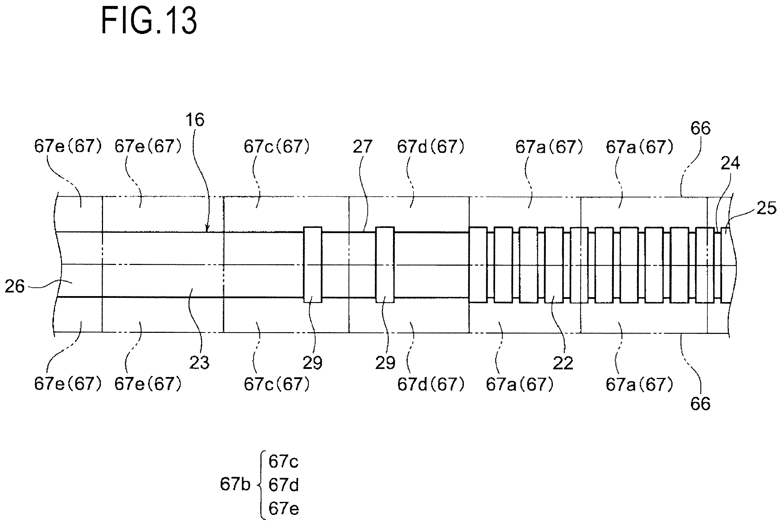

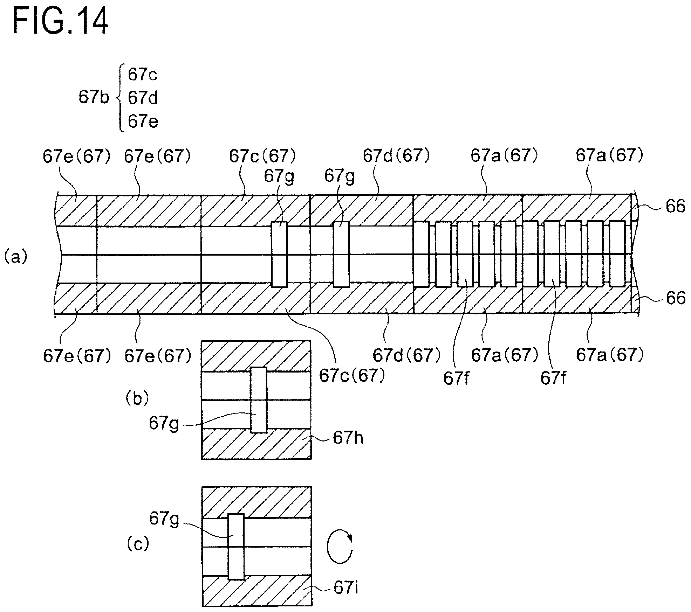

Fig. 11 is a perspective view showing an apparatus for manufacturing the packaging member. Fig. 12 is a plan view showing a main portion of the manufacturing apparatus in Fig. 11. Fig. 13 is a plan view showing a state where mold blocks in Fig. 12 and the packaging member are disposed. Fig. 14(a) to Fig. 14(c) are sectional views showing the mold blocks in Fig. 13.

In Fig. 11, the reference numeral 51 represents a manufacturing apparatus for molding the packaging member 16 (for example, see Fig. 3 and Fig. 13) out of resin. The manufacturing apparatus 51 has a resin extruding portion 52, a molding portion 53, a cooling portion 54 and a cutting portion 55. This configuration is simply an example. The configuration may further include a portion for adding or additionally processing mark portions as will be described later.

The molding portion 53 is continued on the downstream side of the resin extruding portion 52. In addition, the cooling portion 54 is continued on the downstream side of the molding portion 53. The cutting portion 55 is disposed at the terminal of the cooling portion 54 (that is, disposed at the terminal of the apparatus) so as to operate to cut the packaging member 16 into a predetermined length.

The resin extruding portion 52 has a hopper 56 serving as a portion where a resin material is injected, an extruding portion body 57 following the hopper 56 and extending horizontally, and a dice 58 protruding from an end portion of the extruding portion body 57. The dice 58 has a resin material extrusion port 59. The resin material extrusion port 59 is disposed in an inlet 60 (see Fig. 12) of the molding portion 53.

In Fig. 12, the molding portion 53 is a portion which performs resin molding straightly between the inlet 60 and an outlet 61 and includes a pair of molding structure portions 62. The molding structure portions 62 are disposed and paired on the opposite left and right sides of a flexible and cylindrical resin material 63 drawn from the resin material extrusion port 59 of the dice 58 (see Fig. 11). The paired molding structure portions 62 mold the resin material 63 into a predetermined shape.

Each molding structure portion 62 has timing pulleys 64 which are paired in the traveling direction of the resin material 63, an endless belt 65 which is moved in the illustrated arrow direction by the paired timing pulleys 64, and a mold block assembly 66 which is attached to the endless belt 65 so that the mold block assembly 66 can move.

The mold block assembly 66 has a plurality of mold blocks 67. The mold blocks 67 are arranged without any space in the straight portion of the endless belt 65. Each mold block 67 is replaceably fixed to the endless belt 65.

In Fig. 13 and Fig. 14(a), a plurality of kinds of mold blocks 67 are prepared in accordance with the shape of the packaging member 16. In the embodiment, mold blocks 67a for molding the bendable tube portions 22 and mold blocks 67b for molding the non-bendable tube portions 23 are prepared.

The mold blocks 67b for molding the non-bendable tube portions 23 are classified into mold blocks 67c and 67d including portions for molding the movement restriction portions 29 of the attachment portions 27, and mold blocks 67e for molding only the non-bendable tube portion bodies 26. Each mold block 67 is formed into a half-divided shape. The plurality of kinds of mold blocks 67 configured thus engage with the mold blocks 67 of the other molding structure portion 62 to be mated, respectively.

A plurality of groove portions 67f are formed in each mold block 67a. In addition, one groove portion 67g is formed in each mold block 67c, 67d. Each mold block 67e has no groove portion. A suction port (not shown) is formed in each of the groove portions 67f and/or the groove portions 67g so as to bring the resin material 63 into close contact to the inner surface thereof. The groove portion 67f is formed in accordance with the shape of the concave portion 24 and the convex portion 25 of each bendable tube portion 22. On the other hand, the groove portion 67g is formed in accordance with the shape of each movement restriction portion 29.

To change the distance between the paired movement restriction portions 29, it will go well if mold blocks 67h or 67i shown in Fig. 14(b) or Fig. 14(c) are used in place of the mold blocks 67c. The number of these blocks is simply an example. Due to the partial change, not to say, the cost can be reduced as compared with the case where the mold is entirely changed. In addition, lead time of mold manufacturing can be also shortened. That is, it is possible to rapidly deal with a design change.

The mold block 67i rotated at 180 degrees corresponds to the mold block 67d. Thus, in the embodiment, versatility is secured among the mold blocks.

In the aforementioned configuration and structure, the flexible and cylindrical resin material 63 drawn from the resin material extrusion port 59 of the dice 58 is molded into the packaging member 16 with a predetermined shape by the paired molding structure portions 62. The embodiment is not limited to this molding method. For example, blow molding may be included. The packaging member 16 drawn from the paired molding structure portions 62 is cooled in the cooling portion 54 and then cut with a predetermined length.

### <Fifth Embodiment>

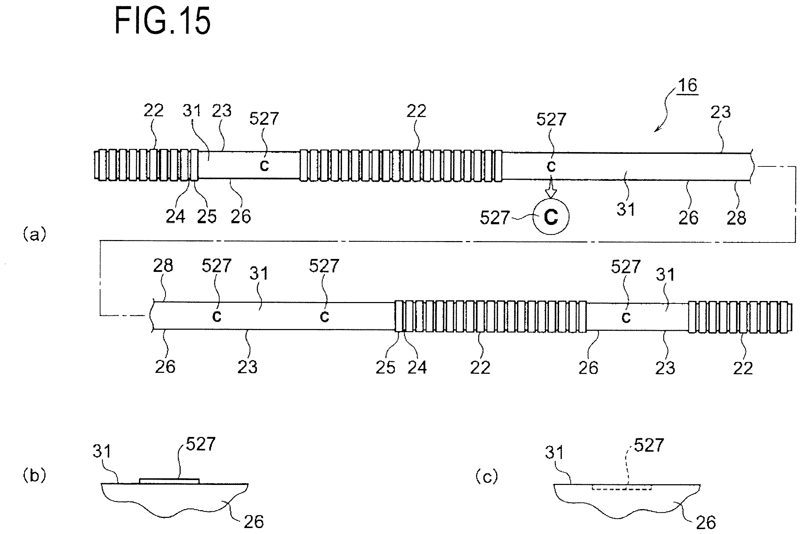

A further wire-harness packaging member will be described below with reference to Fig. 15(a) to Fig. 15(c). Fig. 15(a) to Fig. 15(c) are configuration views showing the packaging member. Constituent members essentially the same as those in the other wire-harness packaging members are referenced correspondingly, and detailed description thereof will be omitted. In addition, the packaging member is included in a wire harness which is wired in the same manner as the wire harness 9 in the first wire-harness packaging member shown in Fig. 1.

In Fig. 15(a), the packaging member 16 has mark portions 527 (that is, setting portions for setting attachment positions) in place of the attachment portions 27 in the first wire-harness packaging member. The mark portions 527 are molded integrally with the non-bendable tube portion bodies 26 as portions to which the clamps 32 (see Fig. 4, Fig. 5 and Fig. 16. The same thing can be applied below.) are attached as post-fitted parts, more in detail, as setting portions for setting the attachment positions.

Each mark portion 527 is formed into such a shape that the attachment position of the clamp 32 can be recognized visually, or such a shape that the attachment position of the clamp 32 can be recognized (or detected) by a sensor or the like. In the embodiment, the mark portion 527 is formed as the mark of "C" meaning a clamp. However, the mark portion 527 may have any shape. The mark portion 527 may have a shape protruding from the outer surface 31 of the non-bendable tube portion body 26 as shown in Fig. 15(b) or a shape obtained by a dent in the outer surface 31 as shown in Fig. 15(c). Incidentally, the protruding height, the dented depth, etc. may be set desirably. In addition, the shape may be not a dent but a through hole. In this case, the through hole is covered with the clamp 32 attached thereto, so that the through hole can be free from any problem of moisture penetration.

A plurality of mark portions 527 may be formed in the circumferential direction of each non-bendable tube portion body 26. When the mark portions 527 are set to protrude, the mark portions 527 can be used as portions hooking the clamp 32. Therefore, the mark portions 527 are also effective as rotation stopper portions.

When the packaging member 16 configured thus according to the this wire-harness packaging member is used, the same effect as that in the first embodiment can be obtained. That is, work carried out by manual labor in the background art in order to set attachment positions to post-fitted parts can be made unnecessary. Since the work for setting the attachment positions by manual labor can be made unnecessary, special jigs can be made unnecessary. Therefore, according to the packaging member 16 according to this wire-harness packaging member, there is an effect that it is possible to improve workability and reduce jigs as compared with a background-art one.

In addition, when the mark portions are detected by sensors as described above, the post-fitted parts can be attached automatically or formed integrally. Thus, the workability can be further improved.

A large-sized jig plate for manufacturing the long wire harness 9 (see Fig. 4 and Fig. 5) is also included in the special jigs which can be made unnecessary.

In the aforementioned fifth wire-harness packaging member, a shape protruding from the outer surface 31 of each non-bendable tube portion body 26 or a shape dented in the outer surface 31 is used as a mark for the mark portion 527, and a mark formed by a resin molding mold (that is, each mold block 67 in Fig. 12 and Fig. 13) is used as the mark portion 527. However, a portion of the following mark (that is, the following mark portion) may be used. That is, the mark portion 527 may be a portion provided with a mark added to or additionally processed in the outer surface 31 of the non-bendable tube portion body 26, for example, by printing, coloring, placing a seal, stamping, perforating, etc., though not shown particularly in the drawings. It is effective that such addition or additional processing is performed automatically by the manufacturing apparatus shown in Fig. 11. The manufacturing apparatus 51 includes the cutting portion 55, which can cut the packaging member 16 with a predetermined length. Therefore, the configuration of the manufacturing apparatus 51 may include a portion which can perform addition or additional processing of marks by use of dimensional data related to cutting and, for example, at the timing of cutting.

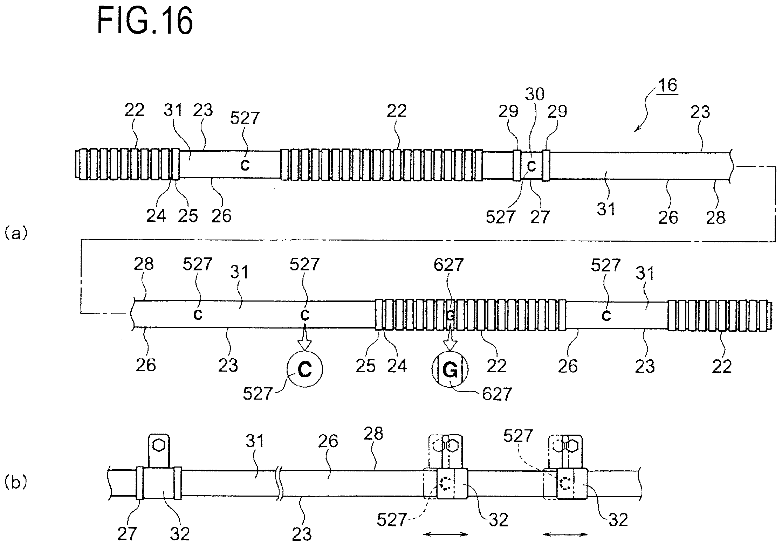

A sixth wire-harness packaging member will be described below with reference to Fig. 16(a) and Fig. 16(b). Fig. 16(a) and Fig. 16(b) are configuration views showing the packaging member. Constituent members essentially the same as those in the first to fifth wire-harness packaging members are referenced correspondingly, and detailed description thereof will be omitted. In addition, this packaging member is included in a wire harness which is wired in the same manner as the wire harness 9 shown in Fig. 1.

In Fig. 16(a) and Fig. 16(b), the packaging member 16 is molded integrally so that the attachment portions 27 in the first wire-harness packaging member and the mark portions 527 in the fifth wire-harness packaging member are mixed. In the sixth wire-harness packaging member, the clamps 32 attached to the attachment portions 27 are positioned while the clamps 32 attached to the mark portions 527 are set slidable. It is therefore possible to reduce influence of misalignment which may occur among the attachment positions when the wire harness 9 is attached to a vehicle (see Fig. 4).

Incidentally, a mark portion 627 (that is, a setting portion for setting an attachment position) formed in the bendable tube portion 22 and provided with a mark of "G" (this mark is simply an example) is a portion with which a not-shown grommet (that is, a post-fitted part) should be retrofitted and molded integrally. The mark portion 627 is effective to eliminate a well-known grommet opening/closing process and to enhance the waterproofness due to close contact.

The wire harness 9 and the packaging member 16 according to each embodiment will be summarized below.
(1) A packaging member 16 (wire-harness packaging member) covers a high voltage coaxial composite conductive path 15 (conductive path). In addition, the packaging member 16 includes setting portions (attachment portions 27, 127, 227 or 327, or mark portions 527 or 627) which is provided on an outer surface of the packaging member 16 so as to set attachment positions of clamps 32 (post-fitted parts) attached to the packaging member 16.
(2) The packaging member 16 is a tube body which is made of resin and which is provided with mark portions (527 or 627) as the setting portions when the tube body is molded out of the resin.
(3) The packaging member 16 is a tube body which is made of resin and with which attachment portions (27, 127, 227 or 337) are formed integrally as the setting portions when the tube body is molded out of the resin.
(4) In the packaging member 16, each of the attachment portions includes a portion which extends in at least one of a circumferential direction and a tube axis direction of the outer surface.
(5) In the packaging member 16, each of the attachment portions includes convex-shaped portions 129a or strip-shaped portions 229a protruding from the outer surface.
(6) The packaging member 16 is formed into a substantially linear shape as a whole, including bendable tube portions 22 formed as portions which can be bent and non-bendable tube portions formed as portions which are hardly bent, and the attachment portions (27, 127, 227 or 327) are formed in non-bendable tube portion bodies 26 of the non-bendable tube portions 23.
(7) A wire harness includes a packaging member 16 according to any one of the paragraphs (1) through (6), and a high voltage coaxial composite conductive path 15 which is covered with the packaging member 16.
(8) In the wire harness 9, at least a part of the packaging member 16 is disposed under a floor of a vehicle.

The present application is based on a Japanese patent application (Japanese Patent Application No. 2012-164310) filed on July 25, 2012 and a Japanese patent application (Japanese Patent Application No. 2013-29579) filed on February 19, 2013.

### Industrial Applicability

According to a wire-harness packaging member and a wire harness according to the invention, it is effective to be able to provide a wire-harness packaging member and a wire harness capable of improving workability, reducing jigs, etc.

### Description of Reference Numerals and Signs

1...hybrid car, 2...engine, 3...motor unit, 4...inverter unit, 5...battery, 6...engine room, 7...car rear portion, 8,9...wire harness, 10...intermediate portion, 11...vehicle underfloor, 12...junction block, 13...rear end, 14...front end, 15...high voltage coaxial composite conductive path (conductive path), 16...packaging member (wire-harness packaging member), 17...first conductive path, 18...first insulator, 19...second conductive path, 20...second insulator, 21...electromagnetic shield member, 22...bendable tube portion, 23...non-bendable tube portion, 24...concave portion, 25...convex portion, 26...non-bendable tube portion body, 27...attachment portion (setting portion), 28...underfloor non-bendable tube portion, 29...movement restriction portion, 30...attachment/detachment portion, 31...outer surface, 32...clamp (post-fitted part), 33...tube body attachment portion, 34...fixation portion, 35...bolt insertion hole, 36...bolt, 37...fixing target, 38...shield connector, 39...terminal, 40...chipping resistant portion, 41...heat radiating portion, 42...engagement convex portion, 51...manufacturing apparatus, 52...resin extruding portion, 53...molding portion, 54...cooling portion, 55...cutting portion, 56...hopper, 57...extruding portion body, 58...dice, 59...resin material extrusion port, 60...inlet, 61...outlet, 62...molding structure portion, 63...resin material, 64...timing pulley, 65...endless belt, 66...mold block assembly, 67...mold block, 527,627...mark portion (setting portion for setting attachment position)

## Claims

1. A wire-harness packaging member and a post-fitted part (32), the wire-harness packaging member (16) covering a conductive path (15), the wire-harness packaging member (16) comprising:
a setting portion (127) which is provided on an outer surface of the wire-harness packaging member (16) so as to set an attachment position of the post-fitted part (32) attached to the wire-harness packaging member (16),
wherein the wire-harness packaging member (16) is a tube body which is made of resin and with which an attachment portion (127) is formed integrally as the setting portion (127) when the tube body is molded out of the resin; and
wherein the wire-harness packaging member (16) is formed into a substantially linear shape as a whole, including a bendable tube portion (22) formed as a portion which can be bent and a non-bendable tube portion (23) formed as a portion which is hardly bent, and
at least a part of the wire-harness packaging member (16) is configured to be disposed under a floor (11) of a vehicle (1); **characterized in that**
the non-bendable tube portion (23) is a non-bendable straight tube portion (23);
the attachment portion (127) is formed in the non-bendable straight tube portion (23);
the attachment portion (127) includes a pair of movement restriction portions (129) and an attachment/detachment portion (30); and
each of the pair of movement restriction portions (129) has a plurality of convex-shaped portions (129a) protruding in substantially conical shape .

2. The wire-harness packaging member and the post-fitted part according to claim 1, wherein the attachment portion (127) includes a portion which extends in at least one of a circumferential direction and a tube axis direction of the outer surface.

3. A wire harness comprising:
the wire-harness packaging member (16) and the post-fitted part according to claim 1 or 2; and
a conductive path (15) which is covered with the wire-harness packaging member (16).

## Patentansprüche

1. Kabelbaum-Verkleidungselement und nachträglich montiertes Teil (32), wobei das Kabelbaum-Verkleidungselement (16) einen Leitungsweg (15) abdeckt und das Kabelbaum-Verkleidungselement (16) umfasst:
einen Einstell-Abschnitt (127), der an einer Außenfläche des Kabelbaum-Verkleidungselementes (16) zum Einstellen einer Anbringungsposition des an dem Kabelbaum-Verkleidungselement (16) angebrachten nachträglich montierten Teils (32) vorhanden ist,
wobei das Kabelbaum-Verkleidungselement (16) ein Röhren-Körper ist, der aus Kunststoff besteht und mit dem ein Anbringungs-Abschnitt (127) als der Einstellungs-Abschnitt (127) integral ausgebildet wird, wenn der Röhren-Körper aus dem Kunststoff geformt wird; und
das Kabelbaum-Verkleidungselement (16) als Ganzes in einer im wesentlichen linearen Form ausgebildet ist, die einen biegbaren Röhren-Abschnitt (22), der als ein Abschnitt ausgebildet ist, der gebogen werden kann, sowie einen nicht biegbaren Röhren-Abschnitt (23) einschließt, der als ein Abschnitt ausgebildet ist, der kaum zu biegen ist, und
wenigstens ein Teil des Kabelbaum-Verkleidungselementes (16) zum Anordnen unter einem Boden (11) eines Fahrzeugs (1) eingerichtet ist; **dadurch gekennzeichnet, dass**
der nicht biegbare Röhren-Abschnitt (23) ein nicht biegbarer gerader Röhren-Abschnitt (23) ist;
der Anbringungs-Abschnitt (127) in dem nicht biegbaren geraden Röhren-Abschnitt (23) ausgebildet ist;
der Anbringungs-Abschnitt (127) ein Paar Bewegungseinschränkungs-Abschnitte (129) sowie einen Anbringungs/Abtrennungs-Abschnitt (30) einschließt; und
jeder der paarigen Bewegungseinschränkungs-Abschnitte (129) eine Vielzahl konvex geformter Abschnitte (129a) aufweist, die in einer im Wesentlichen konischen Form vorstehen.

2. Kabelbaum-Verkleidungselement und nachträglich montiertes Teil nach Anspruch 1, wobei der Anbringungs-Abschnitt (127) einen Abschnitt enthält, der sich in einer Umfangsrichtung oder/und einer Röhren-Achsenrichtung der Außenfläche erstreckt.

3. Kabelbaum, der umfasst:
das Kabelbaum-Verkleidungselement (16) und das nachträglich montierte Teil nach Anspruch 1 oder 2; sowie
einen Leitungsweg (15), der mit dem Kabelbaum-Verkleidungselement (16) abgedeckt ist.

## Revendications

1. Elément de mise en boîtier de faisceau de câbles et pièce posée a posteriori (32), l'élément de mise en boîtier de faisceau de câbles (16) recouvrant un chemin conducteur (15), l'élément de mise en boîtier de faisceau de câbles (16) comprenant:
une partie réglage (127) qui est prévue sur une surface extérieure de l'élément de mise en boîtier de faisceau de câbles (16) de manière à fixer une position de fixation de la pièce posée a posteriori (32) fixée à l'élément de mise en boîtier de faisceau de câbles (16),
dans lequel l'élément de mise en boîtier de faisceau de câbles (16) est un corps de tube en résine et avec lequel une partie de fixation (127) fait corps avec la partie réglage (127) lorsque le corps du tube est moulé dans la résine; et
dans lequel l'élément de mise en boîtier de faisceau de câbles (16) est de forme sensiblement linéaire dans l'ensemble, comprenant une partie de tube pliable (22) constituant une partie pouvant être pliée et une partie de tube non pliable (23) constituant une partie à peine pliée
et
au moins une partie de l'élément de mise en boîtier de faisceau de câbles (16) est configurée pour être disposée sous un plancher (11) d'un véhicule (1); **caractérisé en ce que**
la partie de tube non pliable (23) est une partie de tube droite non pliable (23);
la partie fixation (127) est constituée dans la partie de tube droite non pliable (23);
la partie fixation (127) comprend une paire de parties de restriction de mouvement (129) et une partie fixation/détachement (30); et
chacune des paires de parties de restriction de mouvement (129) présente une pluralité de parties de forme convexe (129a) faisant saillie de forme sensiblement conique.

2. Elément de mise en boîtier de faisceau de câbles et pièce posée a posteriori selon la revendication 1,
dans lequel la partie fixation (127) comprend une partie qui s'étend dans au moins l'une de la direction circonférentielle et de la direction de l'axe du tube de la surface extérieure.

3. Faisceau de câbles comprenant:
l'élément de mise en boîtier de faisceau de câbles (16) et la pièce posée a posteriori selon la revendication 1 ou la revendication 2; et
un chemin conducteur (15) qui est recouvert de l'élément de mise en boîtier de faisceau de câbles (16).
